# DEMANDE DE BREVET EUROPEEN

(11) **EP 2 096 334 A1**
(43) Date de publication de la demande: **02.09.2009**
(21) Numéro de dépôt: 09153137.6
(22) Date de dépôt: 18.02.2009
(51) Int. Cl.: F16H 61/04

(54) **Procédé d'engagement d'un rapport en boîte de vitesse mécanique pilotée**

(30) Priorité: 27.02.2008 FR 0851244
(71) Demandeur: PEUGEOT CITROËN AUTOMOBILES S.A., 78140 Vélizy Villacoublay (FR)
(72) Inventeur: Chariou, Hervé, 78220, Viroflay (FR)

(57) **Abrégé**

La présente invention se rapporte essentiellement à un procédé d'engagement anti-raté d'un rapport en boîte de vitesse mécanique pilotée.

Le procédé est essentiellement caractérisé par le fait qu'il comporte les étapes complémentaires suivantes, successivement mise en oeuvre, consistant à, pour réaliser une deuxième tentative d'engagement du rapport: - commander (5) une ouverture puis une fermeture de l'embrayage; - déterminer (7;8;9) une nouvelle position du point de léchage; - engager (10) de nouveau le rapport (R) avec une augmentation d'un effort d'engagement.

L'invention trouve une application immédiate dans le domaine des véhicules automobiles.

## Description

La présente invention concerne un procédé d'engagement en boîte de vitesse mécanique pilotée, dénommée ci-après BVMP, simple embrayage ou double embrayage, sur un véhicule automobile arrêté, moteur tournant. Le procédé d'engagement selon l'invention est destiné à être automatiquement mis en oeuvre lorsqu'une première tentative d'engagement d'un rapport a échoué.

En BVMP l'engagement des rapports et le pilotage de l'embrayage, ou des embrayages, sont réalisés au moyen d'actionneurs dédiés, par exemple de type électrique, hydraulique ou pneumatique, et sont pilotés par un calculateur. Ainsi, chaque actionneur d'embrayage, de sélection du rapport, ou d'engagement du rapport, est piloté en position, en effort ou en pression par un calculateur. La position, l'effort ou la pression sont mesurés par des capteurs permettant d'assurer une régulation en position, en effort ou en pression.

Les calculateurs utilisés désignés TCU (pour Transmission Control Unit en langue anglaise), ou TCM (Transmission Control Module en langue anglaise) reçoivent toutes les informations nécessaires à ces pilotages, que ce soient des paramètres véhicule comme par exemple la vitesse du véhicule ou la position de la pédale de frein, et/ou des paramètres mécaniques comme par exemple le couple moteur, la position d'embrayage de l'organe de couplage ou la position de sélection d'engagement. La présence de ces actionneurs pilotés par le calculateur TCU/TCM permet de rendre les changements de rapports totalement automatiques (cas des boîtes de vitesse automatiques) ou semi automatique (cas des déclenchements manuels par sollicitation d'une demande généralement impulsionnelle par le conducteur). Les actions classiques par pédale de débrayage et levier de changement de rapport sont ainsi supprimées.

En BVMP, la logique de changement de rapport est la suivante : lorsqu'une commande de changement de rapport est reçue par un calculateur, l'embrayage en prise est amené vers une position estimée de débrayage, le rapport est dégagé, le nouveau rapport est sélectionné, synchronisé puis engagé et verrouillé mécaniquement par un dispositif d'anti-lâché.

A l'arrêt du véhicule, une impossibilité d'engagement du rapport peut se produire. Les causes les plus fréquentes de cette impossibilité sont :
- la mauvaise estimation de la position de débrayage ;
- la mauvaise estimation de la position d'engagement ;
- une impossibilité physique d'engagement suite à un choc au niveau des dentures de la couronne de crabot et du manchon de crabotage.

Les mauvaises estimations de position sont typiquement dues à des dérives des capteurs, conséquences de l'usure, de l'évolution en température de l'environnement moteur ou de dispersion en production.

Dans ce cas d'impossibilité d'engagement, le calculateur de transmission TCU/TCM de la BVMP va, dans un premier temps, constater cette impossibilité par la lecture de la position relevée par un capteur d'engagement ; dans l'état de la technique, une stratégie anti-raté d'engagement est alors adoptée dans laquelle on bascule dans un mode dit mode dégradé : dans un tel mode, on va tenter d'engager une seconde fois le même rapport ; en cas de nouvelle impossibilité d'engager le rapport souhaité, la stratégie existante consiste soit à basculer sur un autre rapport, le deuxième en l'occurrence, soit à avorter le changement de rapport en passant, ou en restant, dans la position neutre ou point mort. Dans le cas où le rapport souhaité est la marche arrière, la stratégie adoptée consiste alors à passer, ou rester, dans la position neutre ou point mort. Lors de l'impossibilité de passer en marche arrière, le passage dans la position neutre ou point mort est l'unique solution de secours.

Cet incident n'est donc pas transparent pour le conducteur qui se trouve alors dans un rapport qu'il n'avait pas commandé : neutre ou 2^{nd}.

L'objet de l'invention propose une solution au problème qui vient d'être exposé.

L'invention concerne donc essentiellement un procédé d'engagement d'un rapport en boîte de vitesse mécanique pilotée, dans lequel une première tentative d'engagement dudit rapport a échoué, le procédé comportant notamment l'étape consistant à détecter une impossibilité d'engagement du rapport, caractérisé en ce qu'il comporte au moins une des étapes complémentaires suivantes consistant à, pour réaliser une deuxième tentative d'engagement du rapport:
- commander une ouverture puis fermeture, avantageusement partielle, de l'embrayage ;
- déterminer une nouvelle position du point de léchage (position de début de transmission de couple moteur par l'embrayage), et, avantageusement, piloter l'embrayage en position débrayée ;
- engager de nouveau le rapport avec une augmentation d'un effort d'engagement.

Outre les caractéristiques principales qui viennent d'être mentionnées dans le paragraphe précédent, le procédé d'engagement d'un rapport en boîte de vitesse mécanique pilotée selon l'invention peut présenter une ou plusieurs caractéristiques supplémentaires parmi les suivantes :
- l'ensemble des étapes complémentaires sont successivement mises en oeuvre ;
- le procédé comporte l'étape, préalable aux étapes complémentaires, consistant à réaliser un retour à la position neutre de la boîte de vitesse mécanique pilotée ;
- l'étape consistant à détecter une impossibilité d'engagement du rapport comprend notamment l'opération consistant à observer, pendant une durée supérieure à un seuil préalablement déterminé, une position de l'actionneur d'engagement incompatible avec une situation d'engagement du rapport ;
- le procédé comporte une étape supplémentaire consistant à, préalablement à l'étape de détermination d'une nouvelle position du point de léchage, comparer une vitesse de rotation de l'arbre primaire à une vitesse seuil, l'étape de détermination du point de léchage n'étant amorcée que si la vitesse de rotation de l'arbre primaire a atteint la valeur seuil ;
- le procédé comporte une opération de mémorisation de la nouvelle position du point de léchage, mise en oeuvre à l'issue de l'étape consistant à déterminer une nouvelle position du point de léchage, la nouvelle position mémorisée correspondant une position de l'actionneur d'embrayage lorsque la vitesse de rotation de l'arbre primaire s'annule après une nouvelle ouverture de l'embrayage.

L'invention sera mieux comprise, et d'autres buts, caractéristiques, détails et avantages de celle-ci apparaîtront plus clairement dans la description explicative qui va suivre faite en référence au dessin schématique annexé donné uniquement à titre d'exemple, et dans lequel :

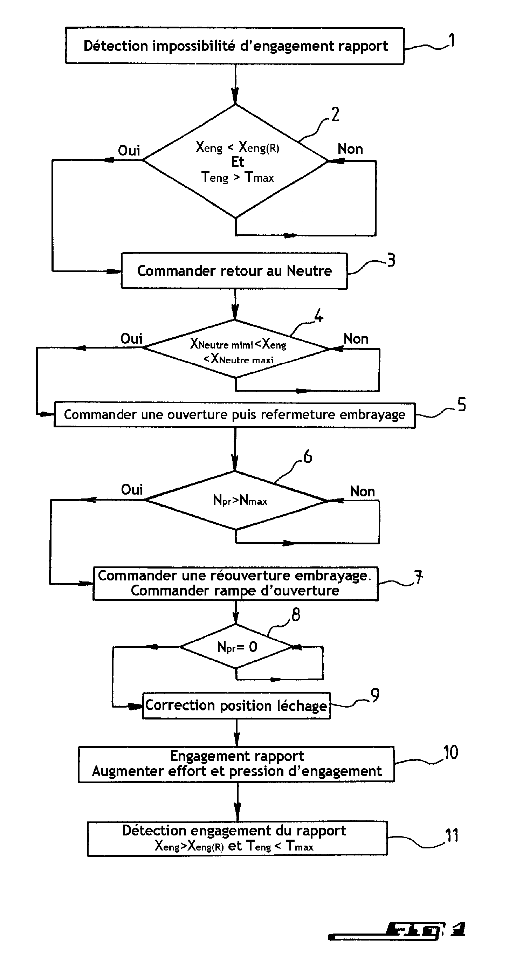

- la figure 1, unique, représente un organigramme illustrant un exemple de mise en oeuvre du procédé selon l'invention.

Le procédé selon l'invention consiste, d'une manière générale, à supprimer au moins une des causes à l'origine du défaut pour engager le rapport demandé initialement avec une forte probabilité de succès.

Un exemple de mise en oeuvre du procédé selon l'invention est donné, sous la forme d'un organigramme, à la figure 1.

Dans cet exemple de mise en oeuvre, une première étape 1 consiste en la détection de l'impossibilité d'engagement du rapport. Une telle détection résulte d'une analyse des valeurs de capteurs appropriés, et notamment d'un capteur de position.

Une étape suivante 2 est une étape de décision dans laquelle deux indicateurs sont analysés ; le premier indicateur est relatif à une position Xeng de l'axe primaire, par rapport à une position de référence Xeng [R] d'engagement de chaque rapport R à enclencher ; le second indicateur est une durée Teng de l'action en échec d'engagement du rapport ; dans l'étape 2, si la position Xeng de l'actionneur d'engagement ne correspond pas à un positionnement traduisant un avancement suffisant du manchon de crabotage pour que le rapport soit effectivement enclenché, ce qui se traduit par l'inéquation Xeng<Xeng(R), et si cette situation dure, à partir de la détection de l'impossibilité d'engagement du rapport, pendant une durée supérieure à un seuil Tmax, alors on passe à une étape suivante 3. La valeur seuil Tmax est choisie de sorte que l'utilisateur perçoive le moins possible le défaut d'enclenchement.

L'étape suivante 3 consiste en la commande de passage en position neutre ou point mort de la boîte de vitesse. Cette étape permet notamment de pouvoir enclencher les actions, prévues par le procédé selon l'invention, de relance d'enclenchement du rapport demandé.

Une étape suivante 4 est une étape de décision dans laquelle on vérifie que le passage au neutre est bien effectif. A cet effet, on analyse le positionnement Xeng de l'actionneur d'engagement par rapport à des valeurs limites mémorisées Xneutre_mini et Xneutre_maxi de positionnement lorsque la position neutre ou point mort est effective. Si le positionnement Xeng de l'actionneur d'engagement est effectivement compris entre les deux valeurs limites, alors on passe à une étape suivante 5.

L'étape suivante 5 consiste à commander une ouverture, suivie d'une fermeture partielle, de l'embrayage. Cette action permet d'entraîner de nouveau en rotation l'arbre primaire. Cette rotation diminue très sensiblement la probabilité de se retrouver en vis-à-vis au niveau denture crabot pignon et manchon de crabotage lors d'une nouvelle tentative d'engagement du rapport, ces différents éléments ayant bougé pendant la rotation. Cette rotation est pilotée au moyen d'un capteur de vitesse de l'arbre primaire ; le capteur de vitesse permet de réaliser une mesure soit de manière directe (mesure sur l'arbre primaire), soit de manière indirecte (mesure sur un élément asservi à l'arbre primaire, par exemple pignon de la marche arrière).

Une étape suivante 6 est une étape de décision dans laquelle on compare une vitesse de rotation Npr de l'arbre primaire par rapport à une vitesse seuil Nmax. Dès que la vitesse seuil est atteinte, on passe à une étape suivante 7.

L'étape suivante 7 consiste à commander une réouverture d'embrayage en actionnant une rampe d'ouverture jusqu'à ce que la vitesse de l'arbre primaire soit redevenue nulle (étape 8). La rampe d'ouverture de l'embrayage permet de corriger les erreurs éventuelles d'estimation de la position d'un point de léchage de l'embrayage. Le point de léchage correspond à la position à partir de laquelle l'embrayage commence à transmettre du couple. Cette position est estimée en lors des phases de démarrage, de rampage ou de décollage. Ce point varie en fonction de la température de l'embrayage ou des frottements internes de l'organe de transmission. La mauvaise appréciation de cette position (dérive, correction insuffisante ou excessive de cette valeur) est une des causes probables d'impossibilité d'engagement d'un rapport.

Une étape suivante 8 est une étape de décision qui permet de décider de la fin de recherche de la position réelle du point de léchage. L'étape considérée repose sur la mesure de la vitesse de rotation Npr de l'arbre primaire. Lorsque cette vitesse est nulle, on considère que la position réelle du point de léchage a été atteinte. On passe alors à une étape suivante 9.

L'étape suivante 9 consiste en la mémorisation de la position réelle, ou corrigée, du point de léchage. Cette mémorisation est avantageuse car elle permet d'optimiser le procédé, dans une mise en oeuvre ultérieure, en réduisant la plage de recherche de la position d'engagement de l'embrayage réalisée dans l'étape 7.

Une fois la position réelle, ou corrigée, du point de léchage mémorisée, on procède, dans une étape suivante 10, à l'engagement du rapport demandé. Cet engagement est fait avec une stratégie d'augmentation progressive de l'effort d'engagement. Cette augmentation de l'effort d'engagement permet de se prémunir d'une part contre une erreur de position en engagement et d'autre part contre des évolutions de la force d'engagement nécessaire. Ces évolutions de l'effort d'engagement sont constatées notamment, mais pas exclusivement, à froid ou par erreur de mesure de la pression de ligne pour un actionneur électro hydraulique. Cet engagement est avantageusement réalisé en boucle ouverte pour éviter une erreur d'estimation de la position d'engagement.

Une étape suivante 11 consiste en la vérification de l'engagement du rapport. La réalité de l'engagement est avérée notamment si la position Xeng du manchon de crabotage ou de l'actionneur d'engagement correspond à un positionnement traduisant un avancement suffisant l'actionneur d'engagement pour que le rapport soit effectivement enclenché ; un tel avancement se traduit par la condition Xeng> Xeng[R]d'engagement ; il doit être observé avant que la durée d'engagement du rapport souhaité, durée dont le point de départ est marqué, dans l'étape 10, par l'engagement du rapport, n'atteigne le seuil Tmax.

En fonction des modes de mise en oeuvre du procédé selon l'invention, au moins une des étapes, ou successions d'étapes, 5, 7 à 9 ou 10, est observée. Avantageusement, afin d'optimiser les chances de succès de la stratégie anti-ratée d'engagement d'un rapport de vitesse mise en place par le procédé selon l'invention, les trois étapes ou successions d'étapes 5, 7 à 9, et 10 sont successivement observées.

## Revendications

1. Procédé d'engagement d'un rapport (R) en boîte de vitesse mécanique pilotée, dans lequel une première tentative d'engagement dudit rapport a échoué, le procédé comportant notamment l'étape (1) consistant à détecter une impossibilité d'engagement du rapport, **caractérisé en ce qu'**il comporte les étapes complémentaires suivantes, successivement mises en oeuvre, consistant à, pour réaliser une deuxième tentative d'engagement du rapport:
- commander (5) une ouverture puis une fermeture de l'embrayage ;
- déterminer (7 ; 8 ; 9) une nouvelle position du point de léchage ;
- engager (10) de nouveau le rapport (R) avec une augmentation d'un effort d'engagement.

2. Procédé selon la revendication 1, **caractérisé en ce qu'**il comporte l'étape, préalable aux étapes complémentaires, consistant à réaliser (3) un retour à la position neutre de la boite de vitesse mécanique pilotée

3. Procédé selon l'une des revendications 1 et 2, **caractérisé en ce que** l'étape (1) consistant à détecter une impossibilité d'engagement du rapport (R) comprend notamment l'opération consistant à observer, pendant une durée (Teng) supérieure à un seuil préalablement déterminé (Tmax), une position (Xeng) de l'actionneur d'engagement incompatible avec une situation Xeng(R) d'engagement du rapport.

4. Procédé selon l'une des revendications 1 à 3, **caractérisé en ce qu'**il comporte une étape supplémentaire (6) consistant à, préalablement à l'étape de détermination (7 ; 8 ; 9) d'une nouvelle position du point de léchage, comparer une vitesse de rotation (Npr) de l'arbre primaire à une vitesse seuil (Nmax), l'étape de détermination du point de léchage n'étant amorcée que si la vitesse de rotation (Npr) de l'arbre primaire a atteint la valeur seuil (Nmax).

5. Procédé selon l'une des revendications 1 à 4, **caractérisé en ce qu'**il comporte une opération de mémorisation (9) de la nouvelle position du point de léchage, mise en oeuvre à l'issue de l'étape consistant à déterminer une nouvelle position du point de léchage, la nouvelle position mémorisée correspondant à la position de l'actionneur d'embrayage lorsque la vitesse de rotation dudit arbre primaire s'annule après une nouvelle ouverture de l'embrayage.
